# EUROPEAN PATENT APPLICATION

(11) **EP 1 926 246 A1**
(43) Date of publication of application: **28.05.2008**
(21) Application number: 06775356.6
(22) Date of filing: 11.08.2006
(51) Int. Cl.: H04L 9/32

(54) **METHOD AND DEVICE FOR INSURING THE SECURITY OF THE ELECTRONIC SIGNATURE DEVICE**

(30) Priority: 12.08.2005 CN 200510090293; 27.10.2005 CN 200510116686; 27.10.2005 CN 200510116685; 04.11.2005 CN 200510115537; 04.11.2005 CN 200510115536
(71) Applicant: LI, Dongsheng, 17 East Qing Hua Road, Haidian District, 100083 Beijing (CN)
(72) Inventor: LI, Dongsheng, 17 East Qing Hua Road, Haidian District, 100083 Beijing (CN)
(74) Representative: Holmberg, Magnus
(86) International application number: PCT/CN2006/002038
(87) International publication number: WO 2007/019791

(57) **Abstract**

The present invention discloses a method and apparatus for ensuring the security of an electronic certificate tool, the method comprising: A: inputting business information by using the input or confirmation function set up in the electronic certificate tool; and step B: encrypting, attaching signature to or / and authenticating the inputted business information by the electronic certificate tool and sending the processed business information over the Internet via a computed connected to the Internet to make business dealing or / and payment. The method and apparatus ensure the security of the electronic certificate tool and are convenient and easy to use.

## Description

### Field of the invention

The present invention relates to the application of an electronic certificate tool, and particularly to a method and apparatus for ensuring the security of an electronic certificate tool.

### Background of the invention

The digital information technology has been developing rapidly and has extended from limited conventional applications to varieties of digital applications of business, commercial and consumer products. Since more and more information and network technologies are utilized in business activities, e-business will surely develop at a high speed. However, the security of electronic certificate must be ensured during the development of e-business, and a conventional way of ensuring the security of electronic certificate is providing an electronic certificate tool for a user.

Many electronic certificate tools are currently in use, such as a Universal Serial BUS Key (USBKEY) with password, an identification code (IC) card, etc. These electronic certificate tools can encrypt data, attach signature to the data or /and authenticate the data, which greatly increase the security of business dealing and payment made by users, who use the electronic certificate tools, on the Internet.

When a user makes business dealing or makes payment on the Internet with an electronic certificate tool, the electronic certificate tool is usually connected to a computer; the user inputs data into the computer and the computer transmits the data to the electronic certificate tool for encryption, signature attachment or / and authentication before sending the data over the Internet. Such operation may be a hidden security threat to the electronic certificate tool, because computer viruses and hackers are rampant at present. Hackers can control the user computer over the Internet through a remote connection by using varieties of Trojan horse programs, intercepts the data sent from the user computer to the electronic certificate tool via security holes in the operation system of the user computer and replaces key data by some "phony" data so that the electronic certificate tool will encrypt, attach signature to or / and authenticate the phony data only. None of the present electronic certificate tool has a verification procedure for data, which means the user has no way to recognize the phony data and unwanted loss may thus be brought to the user.

In addition, using password is another method for protecting an electronic certificate tool from being stolen and passed off. In applications, the electronic certificate tool requires the user to input a password through the computer and the password will remain valid during one operation only, the electronic certificate tool will require the user to input the password again in a next operation. However, since the password is sent to the electronic certificate tool via the computer which may be under remote control over the Internet, it will be easy to intercept the password. Even dynamic password or other password protection method is adopted, one successful password interception can be bad enough to bring considerable loss to the user.

Furthermore, electronic business on the Internet usually requires the user to input his real account number and corresponding password into the computer which passes the account number and password to the electronic certificate tool for encryption, and then sends the encrypted account number and password over the Internet. Suppose the account number is the deposit account number or credit card number of the user and the account number is intercepted by a third party, fraud deposit card or fraud credit card can be made and cash can be withdraw from the user's account by using the fraud card and the intercepted password at an Automatic Teller Machine (ATM). That is a great threat to the user.

### Summary of the Invention

In view of the above, the present invention provides a method for ensuring the security of an electronic certificate tool. The method ensures electronic certificate tool security, and is convenient and easy to use.

The present invention also provides an apparatus for ensuring the security of an electronic certificate tool. The apparatus ensures electronic certificate tool security, and is convenient and easy to use.

The technical solution in accordance with the present invention is as follows:

A method for ensuring the security of an electronic certificate tool comprising:
A: setting up an input or confirmation function in an electronic certificate tool; inputting business information by using the input or confirmation function set up in the electronic certificate tool;
B: encrypting, attaching signature to or / and authenticating the inputted business information by the electronic certificate tool and sending the processed business information over the Internet via a computer connected to the Internet to make business dealing or / and payment.

The business information comprises one or any combination of: business type, bank identification information, account number information, payment amount information, time information, currency type information, dealing password information, account type information and account name information.

The step of setting up the input or confirmation function in the electronic certificate tool comprises: setting up one or multiple keys and key prompt functions on the electronic certificate tool, and the business information in step A is inputted or confirmed with the set up keys; or
the step of setting up the input or confirmation function in the electronic certificate tool comprises: showing a soft keyboard on the display set up on the electronic certificate tool, and the business information in step A is inputted or confirmed with the soft keyboard or
the step of setting up the input or confirmation function in the electronic certificate tool comprises: setting up a biological recognition and input function, and the business information in step A is inputted or confirmed with the biological recognition and input function; or
the step of setting up the input or confirmation function in the electronic certificate tool comprises: saving the business information, and the business information in step A is directly accessed from the saved business information; or
the step of setting up the input or confirmation function in the electronic certificate tool comprises: setting a keyboard or multi-directional button, and the business information in step A is inputted or confirmed with the keyboard or multi-directional button.

When the business information is a password, the step of setting up the input or confirmation function in the electronic certificate tool comprises setting up a dynamic password module, and the business information in step A comprising a dynamic password generated directly by the dynamic password module.

The step of inputting the business information in Step A includes:
A1: displaying a character table and a confirming cursor on a display set up on the electronic certificate tool or on the display of a computer to which the electronic certificate tool is connected, and moving the confirming cursor onto a character in the character table to confirm the input of the character;
A2: repeating step A1 until one or more than one piece of business information is confirmed.

The character table comprises at least an input complete indication for confirming one or more than one piece of business information by moving the confirming cursor via the electronic certificate tool onto the input complete indication after step A1 has been repeated in step A2.

In step A1 the input of the character is confirmed by showing the inputted character as prompt information.

The step of inputting the business information in step A1 comprises showing the inputted business information as prompt information.

The step of showing the prompt information comprises: showing the prompt information on the display of a computer connected to the electronic certificate tool or / and on the display of the electronic certificate tool; or / and indicating the prompt information with an indicator light on the computer connected to the electronic certificate tool or / and an indicator light on the electronic certificate tool; or / and outputting the prompt information with the audio output device of the computer connected to the electronic certificate tool or / and the audio output device of the electronic certificate tool.

Before Step B, the method further comprises: setting up a data confirmation module in the electronic certificate tool, judging whether the business information inputted in step A is valid, proceeding to step B if the business information is valid, otherwise returning to step A to input the business information again.

The step of judging whether the business information inputted in step A is valid comprises: showing the business information or playing an audio version of the business information by the electronic certificate tool or the computer connected to the electronic certificate tool, and regarding the business information valid once the user confirms the business information.

Before Step B and when the business information inputted in Step A is confirmed to be valid, the method further comprises: starting up the electronic certificate tool; after Step B, the method further includes: shutting down the electronic certificate tool. Before Step B, the method further includes: starting up the electronic certificate tool; after Step B, the method further includes: shutting down the electronic certificate tool.

Before starting up the electronic certificate tool, the method further comprises: notifying the user via a notify function set up in the electronic certificate tool that the business information shall be handled with the electronic certificate tool, sending, via a controller on the electronic certificate tool upon receipt of a confirmation from the user, a control signal for starting up the electronic certificate tool to a control module set in the electronic certificate tool, and starting up the electronic certificate tool by the control module.

The step of sending the control signal for starting up the electronic certificate tool to the control module comprises: sending the control signal for starting up the electronic certificate tool to the control module by manually turning on the controller which is a hardware switch or a button; or sending the control signal for starting up the electronic certificate tool to the control module by clicking the controller, which is a software button set on the electronic certificate tool or shown on the display of the computer, by using the input or confirmation function set in the electronic certificate tool; or sending the control signal for starting up the electronic certificate tool to the control module by recognizing a biological feature or electronic feature by the controller which is a biological recognition switch or an electronic recognition switch, the biological recognition switch being a finger print recognition switch, a voice recognition switch or an iris recognition switch, the electronic recognition switch being a magnetic card recognition switch or an identification card (IC) recognition switch.

The step of shutting down the electronic certificate tool comprises: sending a control signal for shutting down the electronic certificate tool to the control module of the electronic certificate tool via a controller set on the electronic certificate tool, and shutting down the electronic certificate tool by the control module; or sending a control signal for shutting down the electronic certificate tool from a timer to the control module of the electronic certificate tool when the elapsed operation time of the electronic certificate tool recorded by the timer exceeds a preset time limit, and shutting down the electronic certificate tool by the control module.

The step of sending the control signal for shutting down the electronic certificate tool to the control module comprises: sending the control signal for shutting down the electronic certificate tool to the control module by manually turning off the controller which is a hardware switch or a button; or sending the control signal for shutting down the electronic certificate tool to the control module by clicking the controller, which is a software button set on the electronic certificate tool or shown on the display of the computer, by using the input or confirmation function set in the electronic certificate tool; or sending the control signal for shutting down the electronic certificate tool to the control module by recognizing a biological feature or electronic feature by the controller which is a biological recognition switch or an electronic recognition switch, the biological recognition switch being a finger print recognition switch, a voice recognition switch or an iris recognition switch, the electronic recognition switch being a magnetic card recognition switch or an identification card (IC) recognition switch.

An apparatus for ensuring the security of an electronic certificate tool comprises an encryption, signature or / and authentication module and a data output module, wherein the encryption, signature or / and authentication module and the data output module are connected to each other; a data input module, and an input confirmation module, which is connected to the encryption, signature or /and authentication module and connected to the data input module; the apparatus is adapted to acquire the inputted business information, confirm the business information, send the business information to the encryption, signature or / and authentication module for encryption, signature attachment or / and authentication, and send the business information to a computer connected to the Internet via the data output module.

The data input module comprises: a keyboard, a single button or a multi-directional button, and a prompt module, adapted to output prompt information on the display or an audio notification to notify the user to input the business information via the keyboard, the single button or the multi-directional button, and to input the business information via the keyboard, the single button or the multi-directional button; or a soft keyboard and a control device, adapted to control the soft keyboard shown on the display with the control device to input the business information; or a biological recognition module, adapted to recognize a biological feature and input the biological feature as the business information; or a dynamic password module, adapted to generate a dynamic password directly and input the dynamic password as the business information; or a storage module, adapted to store business information and to directly input the stored business information upon the starting up of the electronic certificate; or a cursor input module, adapted to move the confirming cursor, shown on the display, repeatedly onto characters in the character table shown on the display to confirm the input of the characters, so as to obtain the business information to be inputted.

The biological recognition module comprises: a finger print recognition module, adapted to recognize finger print and input recognized finger print as the business information; or a voice recognition module, adapted to recognize voice and input recognized voice as the business information; or an iris recognition module, adapted to recognize iris and input recognized iris as the business information.

The apparatus further comprises an information prompt module, connected to the data confirmation module and adapted to receive the business information confirmed by the data confirmation module or to receive via the data confirmation module the business information inputted through the data input module, and to process the received business information as the prompt information.

The apparatus further comprises a primary display module, connected to the information prompt module and adapted to show the prompt information received from the information prompt module.

The information prompt module comprises a prompt information display module, adapted to send the prompt information to the primary display module of the apparatus so as to show the prompt information on a display connected to the apparatus; or a prompt information indication module, adapted to indicate the prompt information with an indicator light on a computer connected to the apparatus or with a standalone indicator light; or a prompt information audio output module, adapted to output an audio version of the prompt information with the audio output device of a computed connected to the apparatus or with a standalone audio output device.

The apparatus further comprises a control module, connected to the encryption, signature or / and authentication module and adapted to control, according to a received control signal for starting up or shutting down the apparatus, whether the confirmed business information should be encrypted, attached signature to or / and authenticated; and the apparatus further comprising a controller, connected to the control module and adapted to send the control signal for starting up or shutting down the apparatus.

The apparatus further comprises a timer, connected to the control module and adapted to time the operation of the apparatus and to stop the operation of the apparatus via the control module when the elapsed operation time of the apparatus exceeds preset time limit.

The apparatus further comprises a time limit setting module, connected to the timer and adapted to setting up the preset time limit for the timer.

The apparatus further comprises a notification module, connected to the control module and adapted to notify the user to send via the controller the control signal for starting up or shutting down the apparatus.

The controller comprises a hardware switch or a button, adapted to send the control signal for starting up or shutting down the apparatus to the control module by turning on / off the switch or by pushing the button; or a software button shown on the display of a computed connected to the apparatus or on a standalone display, wherein the control signal for starting up or shutting down the apparatus is sent to the control module by clicking the software button; or an identity recognition switch, adapted to recognize the identity of the user by using the biological recognition switch or the electronic recognition switch and to send the control signal for starting up or shutting down the apparatus to the control module.

The biological recognition switch in the identity recognition switch comprises a finger print recognition switch, a voice recognition switch or / and an iris recognition switch;
the electronic recognition switch in the identity recognition switch comprises an IC card recognition switch or / and a magnetic card recognition switch.

The business information comprises one or any combination of: business type, bank identification information, account number information, payment amount information, time information, currency type information, dealing password information, account type information and account name information.

It can be seen from the technical scheme above that the method and system provided by the present invention re-construct an electronic certificate tool so that the electronic certificate tool has the function of inputting or confirming data and the user can input the business information directly into the electronic certificate tool for encryption, signature attachment or / and authentication. After that the encrypted, signature-attached or / and authenticated business information can be sent over the Internet via a computer connected to the Internet for business dealings or / and payment. Unlike the present technology, the present invention does not input the business information into the electronic certificate tool via the computer connected to the Internet, therefore the business information will not be intercepted between the user computer and the electronic certificate tool and the security of the electronic certificate tool is ensured. And the method and the apparatus are convenient and easy to use. Furthermore, the present invention can add a control function into the electronic certificate tool so that the user can deliberately start up or shut down the electronic certificate tool and control whether any operation shall be performed on the business information. The present invention further enables the user to confirm the business information via the electronic certificate tool of the present invention before performing any operation on the business information.

### Brief description of the drawings

Figure 1 is a flow chart of the method for ensuring the security of an electronic certificate tool according to Embodiment 1 of the present invention;
Figure 2 is a flow chart of the method for ensuring the security of an electronic certificate tool according to Embodiment 1 of the present invention;
Figure 3 is a schematic diagram of Apparatus 1 for ensuring the security of an electronic certificate tool according to the present invention;
Figure 4 is a schematic diagram of Apparatus 2 for ensuring the security of an electronic certificate tool according to the present invention;
Figure 5 is a flow chart of an electronic certificate method based on the apparatus shown in Figure 4 according to the present invention;
Figure 6 is a flow chart of the operation performed by the electronic certificate tool on the business information in Step 54 of Figure 5;
Figure 7 is a flow chart of the method for ensuring the security of an electronic certificate tool according to Embodiment 3 of the present invention;
Figure 8 is a schematic diagram of Apparatus 3 for ensuring the security of an electronic certificate tool according to the present invention.

### Detailed description of the invention

The present invention is further described hereinafter in detail with reference to accompanying drawings as well as embodiments so as to make the objective, technical solution and merits thereof more apparent.

According to the method of the present invention for ensuring the security of the electronic certificate tool, a user does not input data into a computer which sends the data to an electronic certificate tool for encryption, signature attachment or / and authentication, but inputs or confirms the data directly with the electronic certificate tool for encryption, signature attachment or / and authentication.

Before making a business dealing or payment over the Internet via the electronic certificate tool, the user needs to input data into the electronic certificate tool first. The data is referred to as business information in the present invention and the business information includes any one or any combination of:
business type, including bank transfer and inquiry; bank identification information, including the identification information of the transferring bank or / and the identification information of the receiving bank; account number information, including the account number information of the party who transfers the money or /and the party who receives the money; transfer amount information, including the specific amount of money to be transferred in the business dealing over the Internet; time information, including the specific time of the business dealing on the Internet; currency type information, including the type information of the currency used in the business dealing; business password information, including the password for the current business dealing; account type information, including the type information of the account involved in the business dealing; account name information, including the account name information of the party (parties) involved in the business dealing.

In the present invention, the business information may include key business information only, such as the transfer amount information or / and account number information. In the description given hereinafter, the concept of business information as a whole is adopted, and the specific contents of the business information will not be discussed.

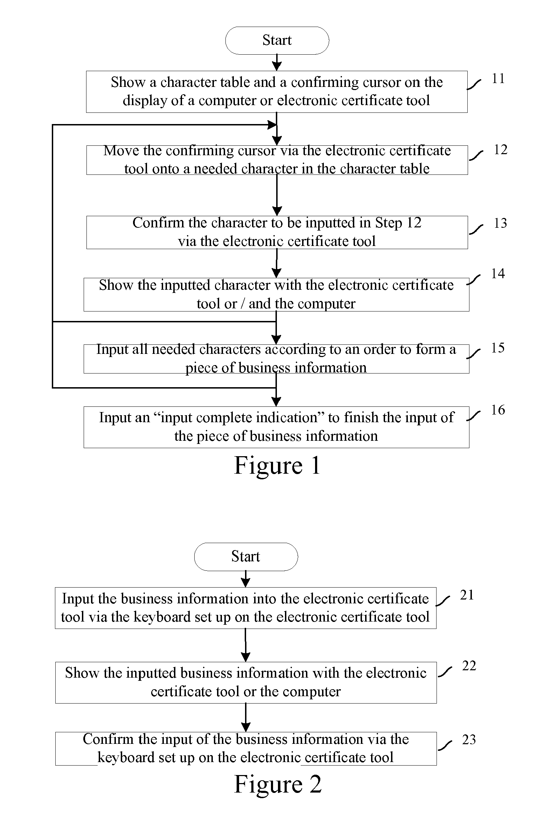

Figure 1 is a flow chart of the method for ensuring the security of an electronic certificate tool according to Embodiment 1 of the present invention, including the steps described as follows:
Step 11: show a character table and a confirming cursor on the display of a computer or a display set up by the electronic certificate tool.

The character table includes a full alphabet, numbers and special characters, even the characters in different languages. The character table further includes an "input complete indication", which may be an unmistakable character in the character table instead of a character set alone outside the character table.
Step 12: move the confirming cursor via the electronic certificate tool to a character in the character table.

A multi-directional button set up on the electronic certificate tool can be adapted to move the confirming cursor, with the navigation technique of the prior art, to the character to be inputted.
Step 13: confirm the character to be inputted in Step 12 via the electronic certificate tool.

The multi-directional button set up on the electronic certificate tool can be adapted to confirm the character to be inputted.
Step 14: prompt the inputted character via the electronic certificate tool or /and a computer.

Different methods can be adapted to prompt the inputted character, and the methods can be used alone or in combination.
1) A display set up on the electronic certificate tool or / and the display of a computer can be adapted to prompt the inputted character;
2) An indicator light set up on the electronic certificate tool or / and an indicator light of the computer can be adapted to prompt the inputted character;
3) An audio output device set up on the electronic certificate tool or / and the audio output device of the computer can be adapted to prompt the inputted character.

Step 15: repeat Steps 12 to 14 to input a number of characters which eventually constitute the business information.

Step 16: repeat Steps 12 to 14 until one "input complete indication" is inputted to end the input of the business information, i.e., move the confirming cursor with the multi-directional button of the electronic certificate tool to the "input complete indication" to finish the input of the business information.

When multiple pieces of business information need to be inputted, Steps 12 to 16 shall be repeated.

Figure 1 shows the process of inputting the business information via the multi-directional button of the electronic certificate tool through the way of navigation. When the business information is inputted via a keyboard set up on the electronic certificate tool, the inputting process shown in Figure 2 shall be adopted, including the steps described as follows:
Step 21: input the business information into the electronic certificate tool via the keyboard set up on the electronic certificate tool.
Step 22: show the inputted business information on the electronic certificate tool or the computer.

Different methods can be adapted to prompt the inputted character, and the methods can be used alone or in combination.
1) A display set up on the electronic certificate tool or / and the display of a computer can be adapted to prompt the inputted character;
2) An indicator light set up on the electronic certificate tool or / and an indicator light of the computer can be adapted to prompt the inputted character;
3) An audio output device set up on the electronic certificate tool or / and the audio output device of the computer can be adapted to prompt the inputted character.

Step 23: confirm the completion of the business information input via the keyboard on the electronic certificate tool.

When multiple pieces of business information need to be inputted, Steps 21 to 23 shall be repeated.

In the present invention, an individual button can be set up on the electronic certificate tool. When the business information, e.g., key data, needs to be inputted, the character table is shown on the display of the computer and the computer controls a cursor to move over the character table which includes a "finish" button. Meanwhile, the computer sends the current location of the cursor to the electronic certificate tool and the user shall push the individual button on the electronic certificate tool when the cursor is moved to a needed character. In this way all needed characters can be inputted into the electronic certificate tool. When the business information has been inputted, the cursor shall be moved onto the "finish" button on the computer display to end the input of the business information. Obviously, a "cancel" or "backward" button can also be added to the computer to correct or cancel an incorrect character. At the same time, the electronic certificate tool may prompt the inputted data amount via voice notification, indicator light or display indication.

The present invention improves the present electronic certificate tool to ensure the security of the electronic certificate tool; the improved electronic certificate tool not only can encrypt, attach signature to or / and authenticate the inputted business information and sends the business information over the Internet via the user computer, but also has an input device to directly acquire the business information from the user instead of the computer.

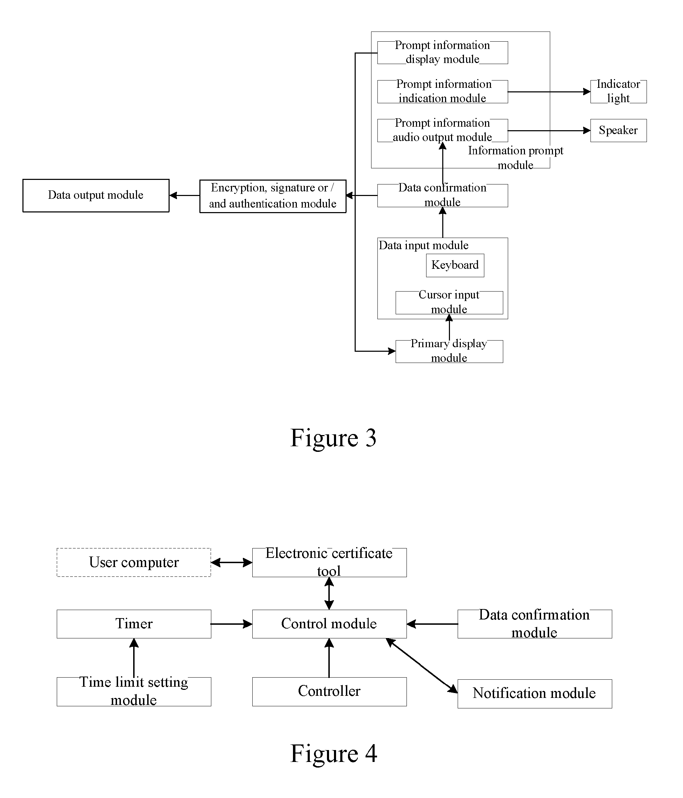

Figure 3 is a schematic diagram of Apparatus 1 for ensuring the security of an electronic certificate tool according to the present invention, including at least: a primary display module, a data input module, a data confirmation module and doubtlessly an encryption, signature or / and authentication module and a data output module. The apparatus is adapted to send the business information confirmed by the data confirmation module to the encryption, signature or / and authentication module for encryption, signature attachment or / and authentication, and to send the processed business information to the user computer via the data output module and further to the Internet via the user computer for business dealing and payment.

In the present invention, the primary display module is adapted to show the character table, the confirming cursor and the confirmed inputted characters. The primary display module can further be adapted to show prompt information on the business information.

The data input module may include a cursor input module, adapted to move the confirming cursor to a needed character in the character table shown on the primary display module, and to a confirmation character.

The data input module may include a keyboard adapted to input characters through keyboard typing.

The data confirmation module is adapted to receive the characters inputted via the data input module and to confirm the characters as the business information.

Obviously, the apparatus provided by the present invention for electronic certificate tool security may further includes an information prompt module, adapted to receive the confirmed business information from the data confirmation module or to receive from the data confirmation module the characters inputted via the data input module, and to prompt the characters. The information prompt module includes one or any combination of: a prompt information display module, a prompt information indication module and a prompt information audio output module, wherein:
the prompt information display module is adapted to display the business information or inputted characters on the primary display module, or on a stand-alone display, or on a the display of the user computer;
the prompt information indication module is adapted to prompt the business information or inputted characters by using an indicator light of the user computer or / and an indicator light on the electronic certificate tool; and
the prompt information audio output module is adapted to prompt the business information or inputted characters by using the audio output device of the user computer or / and the audio output device on the electronic certificate tool.

In practical applications, the cursor input module of the data input module on the electronic certificate tool in accordance with the present invention may include a multi-directional button, adapted to input characters and confirm business information through navigation, and to display the inputted characters or to confirm business information on the display of the user computer or electronic certificate tool. The application of the multi-directional button is described as follows.

When the characters to be inputted are business information, e.g., the transfer amount or the recipient account, the display of the computer or electronic certificate tool shows a character table and a confirming cursor, the confirming cursor can be moved with the multi-directional button set up on the electronic certificate tool onto a needed character, then the input of the character is confirmed with the multi-directional button set up on the electronic certificate tool, and at the same time the inputted character is shown on the display of the computer or electronic certificate tool, or / and a notification sound is played. After all needed characters has been inputted, the multi-directional button set on the electronic certificate tool shall be moved onto a "confirm" character to confirm the character input so as to complete the input of a piece of business information.

When the business information to be inputted is a password, the display of the computer or electronic certificate tool may need not to show the inputted characters and the notification sound may need not to be played. If the user requires prompt information, the prompt information should be shown on the electronic certificate tool, e.g., by using sound, indicator light or display of the electronic certificate tool, so that the password will not leak beyond the electronic certificate tool in the application and the security of the operation can be improved.

The navigation information of the confirming cursor is managed by the electronic certificate tool which also controls the confirmation of the inputted characters, therefore the inputted business information is acquired under absolute control of the electronic certificate tool and cannot be altered from outside, hence the authenticity and correctness of the inputted business information is ensured.

In the present invention, the apparatus shown in Figure 3 includes the data confirmation module and the information prompt module, so the business information can be verified before being transferred over the Internet for payment or / and business dealing, and only the valid business information will be used in the business dealing.

Obviously, when the business information shall be verified, the business information needs not be inputted via the electronic certificate tool and the electronic certificate tool needs not the data input module; the data confirmation module and the information prompt module will directly acquire the business information from the computer with which the user inputs the business information.

An embodiment is hereinafter given to further illustrate this invention.

In a certain electronic certificate application, the format, e.g., message format and data length, of the data to be processed by the electronic certificate tool as well as the key component of the data is fixed with the application. For example, when the electronic certificate tool is supposed to process a signature attached to bank transfer data, the transfer amount and the recipient account number shall be included in the business information. A key data selection script can be downloaded into the electronic certificate tool to pick out the business information from all data and show the business information when the electronic certificate tool is going to process the data.
Table 1 shows the format of the data to be processed by an electronic certificate tool in signing process:

**Table 1**

| Data Meaning | Data Description | Data Length | Data Format | Other |
|---|---|---|---|---|
| Function code | 01: Transfer 02: Inquiry | 2 | ASCII | |
| Length of the follow-up data | | 1 | HEX | |
| Follow-up data | | | | |

Table 2 shows the content of the transfer information:

**Table 2**

| Data Meaning | Data Content | Data Format | Data Length |
|---|---|---|---|
| Business type | 01 h-Transfer | HEX | 1 |
| Transfer bank | Bank identification | BIN | 4 |
| Transfer from account number | Account number | ASCII | 20 |
| Transfer amount | Transfer amount | HEX | 5 |
| Receiving account name | Name | Chinese character code | 16 |
| Receiving bank | Bank identification | BIN | 4 |
| Receiving account number | Account number | ASCII | 20 |
| Time | Year/Month/Date/Hour /Minute/Second | BIN | 7 |
| Data verification code | CRC of the preceding data | BIN | 2 |

Table 3 shows the content of the inquiry information:

**Table 3**

| Data meaning | Data Content | Data Format | Data Length |
|---|---|---|---|
| Business type | 02h - Inquiry | HEX | 1 |
| Inquired account type | 01 h - Current deposit | BIN | 1 |
| | 02h - Fixed deposit | | |
| Inquired currency | 01 h - CNY | BIN | 1 |
| | 02h - US Dollar | | |
| Bank | Bank identification | BIN | 4 |
| Account number | Account number | ASCII | 20 |
| Starting time of the inquiry | Year/Month/Date | BIN | 4 |
| Ending time of the inquiry | Year/Month/Date | BIN | 4 |
| Data verification code | CRC of the preceding data | BIN | 2 |

The script for the electronic certificate tool can be programmed as either of the following:
C=01, 25, 5, N, "Transfer amount", 50, 20, A, "Recipient account number"

Function code 01 indicates that the five bytes following the 25^{th} byte are data in numeric format for transfer amount and the 20 bytes following the 50^{th} byte are data in ASCII format for the recipient account number.

C=02, 7, 20, A, "Account number"

Function code 02 indicates that the 20 bytes following the 7^{th} byte are data in ASCII format for account number.

In this way, the authenticity and correctness of the business information is ensured.

The electronic certificate tool in accordance with the present invention is usually connected to the user computer when needed and disconnected from the computer when the operation is done. Since the connection time is comparatively short, the electronic certificate tool is comparatively secure. However, if the electronic certificate tool is not disconnected from the computer after the operation, or the electronic certificate tool operation is continuously required, the security of the electronic certificate tool may face hidden threat. So another apparatus for ensuring the security of the electronic certificate tool, as shown in Figure 4, is developed by the present invention based on the apparatus shown in Figure 3. The apparatus in Figure 4 includes the electronic certificate tool shown in Figure 3, a control module and a controller.

The electronic certificate tool may be the electronic certificate tool shown in Figure 3 or other kind of electronic certificate tool in the market at present, and the electronic certificate tool is connected to a computer connected to the Internet and is adapted to encrypt, attach signature to or / and authenticate the business information and send the business information via the computer over the Internet for payment or / and business dealing.

The control module is connected to the electronic certificate tool and adapted to control the electronic certificate tool by receiving a control signal from the controller and controlling the starting up and shutting down of the electronic certificate tool. The control module may further control the operation time of the electronic certificate tool and the encryption, signature attachment or / and authentication of the business information.

The controller is connected to the control module and is adapted to send a control signal to the control module for starting up or / and shutting down the electronic certificate tool via the control module. In the present invention, the controller may be constructed in either of the following structures:
hardware switch or button: the controller is constructed with hardware component, i.e., a switch or a button, which can sends the control signal to the control module for starting up or / and shutting down the electronic certificate tool;
software button: a "button" is shown on the display of the computer or electronic certificate tool by using a software and the control signal is sent to the control module for starting up or / and shutting down the electronic certificate tool when the "button" is clicked;
identity recognition switch: a biological recognition switch or an electronic recognition switch is adopted to recognize the identity of an operator, if the operator is a valid user, the control signal will be sent to the control module for starting up or / and shutting down the electronic certificate tool.

The biological recognition switch as the identity recognition switch in the present invention includes a finger print recognition switch, a voice recognition switch or / and an iris recognition switch; the electronic recognition switch as the identity recognition switch includes an IC card recognition switch or / and a magnetic card recognition switch.

The apparatus shown in Figure 4 may also includes a timer and a time limit setting module, wherein:
the timer is connected to the control module and is adapted to calculated via the control module the elapsed operation time of the electronic certificate tool; the timer is launched as soon as the electronic certificate tool is started up and will shut down the electronic certificate tool via the control module once the elapsed operation time exceeds preset time limit;
the time limit setting module is connected to the timer and adapted to set a time limit parameter for the timer.

The apparatus shown in Figure 4 may also includes a notification module, which is connected to the control module and adapted to show a notification window on the display of the computer or electronic certificate tool before the electronic certificate tool is started up, the notification window notifies the user to send a control signal for starting up the electronic certificate tool by using the controller before using the electronic certificate tool.

Obviously, when the electronic certificate tool adopted in the present invention is an electronic certificate tool of the prior art, the apparatus shown in Figure 4 may further includes the data confirmation module which is connected to the control module and is adapted to acquire, before the control signal for starting up the electronic certificate tool is sent via the controller, the business information to be processed by the electronic certificate tool so that the user may check the business information. Usually the business information to be processed will be shown in the display of the computer or the electronic certificate tool for the user to check; the user will start up the electronic certificate tool in accordance with the prior art via the controller after confirming the business information.

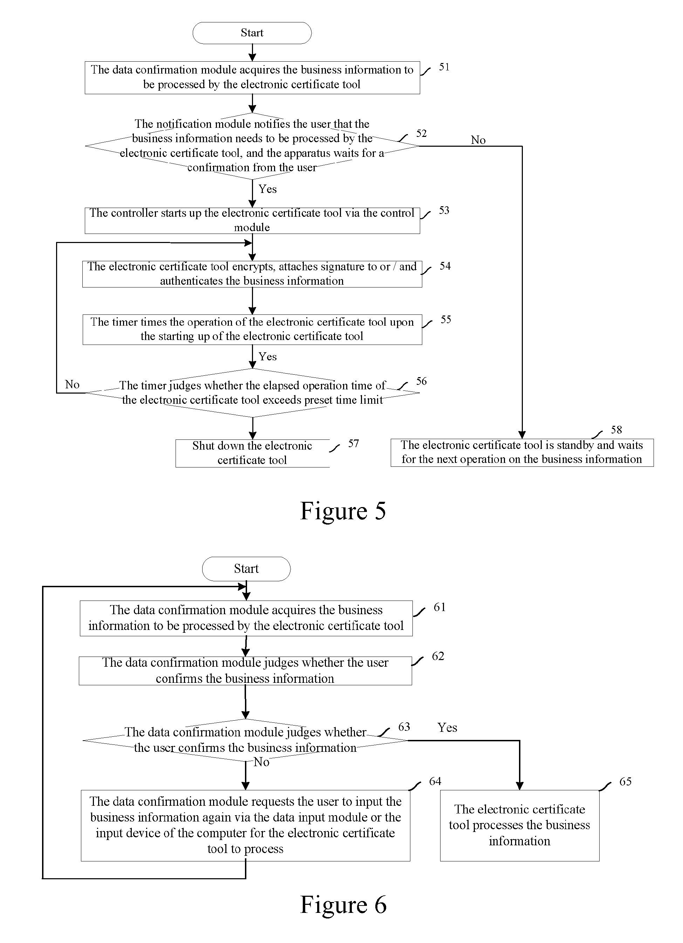

The present invention further provides an electronic certificate method based on the apparatus show in Figure 4. The method, as shown in Figure 5, includes the steps described as follows:
Step 51: the data confirmation module acquires the business information to be processed by the electronic certificate tool.
Step 52: the notification module notifies the user to process the business information, if the user confirms the operation, proceed to Step 53; otherwise proceed to Step 58.

When it is needed to process the business information, the computer may prompt a notification window via the notification module to notify the user to process the business information. If the user confirms the operation, the user should click the "button" in the notification window to send a control signal for starting up the electronic certificate tool to the controller; otherwise the electronic certificate tool should be standby.

Step 53: the controller starts up the electronic certificate tool via the control module.

The present invention adds a controller to the apparatus shown in Figure 3 or an electronic certificate tool of the prior art, therefore the user needs to manually (including by means of identity recognition) turn on the controller to sends a control signal for starting up the electronic certificate tool to the control module every time the electronic certificate tool is needed.

Different types of controllers should be turned on by different means.

A hardware switch or button as the controller should be turned on manually;
a "button" shown on the display of the computer or electronic certificate tool as the controller should be turned on by being clicked manually; and
a biological recognition switch should be turned on by means of biological recognition, e.g., a finger print recognition switch should be turned on by means of finger print recognition, a voice recognition switch should be turned on by means of voice recognition and an iris recognition switch should be turned on by means of iris recognition; and
an electronic recognition switch should be turned on by means of electronic recognition, e.g., an IC card recognition switch should be turned on by recognizing the identity information carried by an IC card and a magnetic card recognition switch should be turned on by recognizing the identity information carried by a magnetic card.

Step 54: the electronic certificate tool encrypts, attaches signature to or / and authenticates the business information.

Step 55: when the electronic certificate tool is started up, the timer starts to calculate the elapsed operation time of the electronic certificate tool.

In Step 55, the notification module may be adapted to show the time limit and when the time limit is exceeded, the electronic certificate tool will be shut down. The time limit can be modified at any time.

Step 56: the timer judges whether the time limit is exceeded, proceed to Step 57 if the time limit is exceeded, otherwise return to Step 54.

Before the whole process, the time limit setting module sets the time limit for the timer; the notification module may show the time limit parameter and the present elapsed operation time of the electronic certificate tool in Steps 55 and 56. The time limit parameter can be modified at any time.

Step 57: shut down the electronic certificate tool.

Step 58: the electronic certificate tool is standby and waiting for the next operation on the business information.

The user may directly judges, from Step 55 to Step 57, whether the operation of the electronic certificate tool is completed. When the operation is completed, the controller should be turned off to send the control signal for shutting down the electronic certificate tool to the control module so as to shut down the electronic certificate tool.

Figure 6 shows the operation performed by the electronic certificate tool on the business information in Step 54 of Figure 5, including the steps described as follows:
Step 61: the data confirmation module acquires the business information to be processed by the electronic certificate tool.
Step 62: the data confirmation module prompt the business information so that the user can confirm the business information.
Step 63: the data confirmation module judges whether the business information is confirmed by the user, proceed to Step 65 if the business information is confirmed by the user, otherwise proceed to Step 64.
Step 64: the data confirmation module requests the user to input again via the data input module or the input device of the computer the business information to be process by the electronic certificate tool, then Step 61 shall be performed.
Step 65: the electronic certificate tool processes the business information.

In the present invention, the business information is usually inputted via the data input module to ensure the security of the electronic certificate tool, then the business information is confirmed via the data confirmation module, encrypted, signed and authenticated by the encryption, signature or / and authentication module and sent via the data output module to the computer connected to the electronic certificate tool, after that the business information is sent by the computer over the Internet for business dealing or / and payment. The data input module may adopt keyboard input, cursor input or other kinds of input methods. A description is given hereinafter to illustrate the input methods.

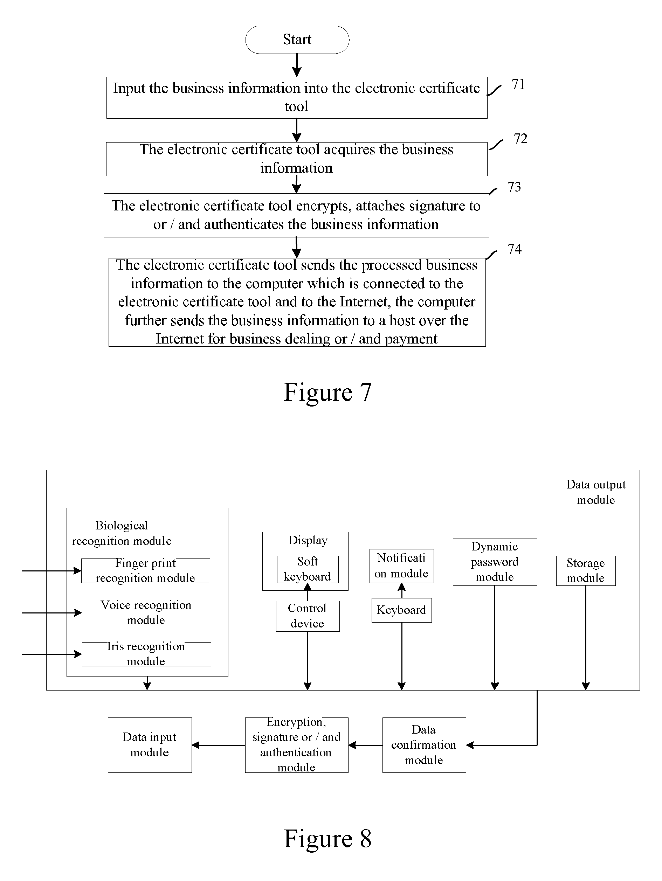

Figure 7 is a flow chart of the method for ensuring the security of an electronic certificate tool according to Embodiment 3 of the present invention, including the steps described as follows:
Step 71: input the business information into the electronic certificate tool.
   The input method may include:
   1) when the data input module of the electronic certificate tool includes keys and key prompt functions, inputting the business information directly into the electronic certificate tool by using the keys or key combos;
   2) when a soft keyboard is shown in the display of the computer or electronic certificate tool, inputting the business information into the electronic certificate tool by operating the soft keyboard via the data input module of the electronic certificate tool, wherein the control device of the electronic certificate tool is usually button(s) or control stick(s);
   3) when the data input module of the electronic certificate tool is a biological recognition module, acquiring the business information by recognizing biological features of the user, e.g., finger print, voice or iris, and inputting the acquired business information into the electronic certificate tool, wherein the acquired data can be utilized directly or as a characteristic code of a certain algorithm;
   4) when the data input module of the electronic certificate tool has already stores the business information, retrieving the business information directly when needed. The way of retrieving includes: first, retrieving by accessing the business information directly when needed if the data input module has already recorded or stored the business information upon the initiation of the electronic certificate tool; second, retrieving by accessing the business information directly when the electronic certificate tool is in use if the data input module of the electronic certificate tool is bundled with the business information;
   5) when the data input module of the electronic certificate tool is a dynamic password module, generating a dynamic password directly with in the electronic certificate tool; such approach is usually adopted when the needed business information is a password, and the dynamic password in the present invention, unlike the static password in the prior art which is a fixed string to be inputted every time when needed, provides different strings to be inputted from time to time and the strings are generated by a password sequence algorithm which is used by both the input device and the verification device to ensure correct verification of the password;
   6) inputting the business information into the electronic certificate tool by a computer connected to the electronic certificate tool but not connected to the Internet.
Step 72: the electronic certificate tool acquires the business information.
Step 73: the electronic certificate tool encrypts, attaches signature to or / and authenticates the acquired business information.

This step is performed by the encryption, signature or / and authentication module of the electronic certificate tool.

In this step, symmetric key algorithm or asymmetric key algorithm can be adopted for the encryption. When symmetric key algorithm is adopted, the encrypted key can be stored in the electronic certificate tool in advance or be encrypted and sent to the electronic certificate tool over the Internet upon payment or / and business dealing; when asymmetric key algorithm is adopted, a pair of public key and private key are used, the electronic certificate tool encrypts the business information with the public key and sends the business information to a host over the Internet, and the host decrypts the business information with the private key.

Step 74: the electronic certificate tool sends the processed business information to the computer which is connected to the electronic certificate tool and to the Internet, the computer sends the business information to a host over the Internet for payment or / and business dealing.

Figure 8 is a schematic diagram of Apparatus 3 according to the present invention, which is based on the apparatus in Figure 3 for ensuring the security of an electronic certificate tool. The apparatus in Figure 8 includes a data input module, a data confirmation module, an encryption, signature or / and authentication module and a data output module. The business information is inputted via the data input module into the electronic certificate tool; the data confirmation module receives the business information from the data input module and confirms the business information; the encryption, signature or / and authentication module encrypts, attaches signature to or / and authenticates the business information received by the data confirmation module; and the data output module sends the processed business information to the computer connected to the est.

In Figure 8, the business information may be inputted via data input module in one of the following ways.

1 The data input module may include a keyboard or a keyboard and a prompt module, the keyboard is connected to the electronic certificate tool or is set up on the electronic certificate tool, and is adapted to input the business information. In the present invention, the inputted business information can be prompted, on the computer display or on a standalone display or through voice notification, by the prompt module while being inputted.

2 The data input module may include a soft keyboard and a control device; the soft keyboard is shown on the display set up on the electronic certificate tool or on the display of the computer connected to the electronic certificate tool, the control device can be set up on the electronic certificate tool and be adapted to operate the soft keyboard to choose the business information directly for the electronic certificate tool.

3 The data input module may include a biological recognition module, adapted to acquire the business information by recognizing the biological feature of the user and input the business information directly to the electronic certificate tool.

To be itemized, the biological recognition module includes: 1) a finger print recognition module, adapted to acquire the business information by recognizing finger print and input the business information directly to the electronic certificate tool; 2) a voice recognition module, adapted to acquire the business information by recognizing voice and input the business information directly to the electronic certificate tool; 3) a iris recognition module, adapted to acquire the business information by recognizing iris and input the business information directly to the electronic certificate tool.

4 The data input module may include a dynamic password module, adapted to generate a dynamic password directly within the electronic certificate tool.

5 The apparatus may includes a storage module, adapted to store the business information of the electronic certificate tool, and the electronic certificate tool directly access the business information according to an input command, and regarded the accessed business information as the inputted business information.

To sum up, the technical scheme provided by the present invention, including the method and apparatus, for ensuring the security of the electronic certificate tool has the following advantages: 1) the technical scheme is easy to implement by adding self-control to the electronic certificate tool with the help of some computer software; 2) the technical scheme is universal and theoretically can be applied to all kinds of electronic certificate tools; 3) the technical scheme is highly practical and easy to be applied in wide range because the technology utilized is quite mature; 4) the technical scheme provides high security for electronic certificate tools to eliminate hidden security threats and guarantee true and correct data.

In one sentence, the method and apparatus provided by the present invention for ensuring the security of an electronic certificate tool do improve user security, are convenient and easy to use, and can be applied in wide range.

The purpose, technical solution and merits of the present invention have been described in detail with the embodiments. It should be appreciated that the foregoing is only embodiments of this invention and is not for use in limiting the invention. Any modification, equivalent substitution and improvement within the spirit and principles of the invention should be covered in the protection scope of the invention.

## Claims

1. A method for ensuring the security of an electronic certificate tool, comprising:
setting up an input or confirmation function in the electronic certificate tool;
A: inputting business information by using the input or confirmation function set up in the electronic certificate tool;
B: encrypting, attaching signature to or / and authenticating the inputted business information by the electronic certificate tool and sending the processed business information over the Internet via a computer connected to the Internet to make business dealing or / and payment.

2. The method according to Claim 1, wherein the business information comprises one or any combination of: business type, bank identification information, account number information, payment amount information, time information, currency type information, dealing password information, account type information and account name information.

3. The method according to Claim 1, wherein the step of setting up the input or confirmation function in the electronic certificate tool comprises:
setting up one or multiple keys and key prompt functions on the electronic certificate tool, and the business information in step A is inputted or confirmed with the set up keys; or
showing a soft keyboard on the display set up on the electronic certificate tool, and the business information in step A is inputted or confirmed with the soft keyboard; or
setting up a biological recognition and input function, and the business information in step A is inputted or confirmed with the biological recognition and input function; or
saving the business information, and the business information in step A is directly accessed from the saved business information; or
setting a keyboard or multi-directional button, and the business information in step A is inputted or confirmed with the keyboard or multi-directional button.

4. The method according to Claim 1, wherein the business information is a password;
the step of setting up the input or confirmation function in the electronic certificate tool comprises: setting up a dynamic password module, and the business information in step A comprising a dynamic password generated directly by the dynamic password module.

5. The method according to Claim 1, wherein the step of inputting the business information in step A comprises:
A1: displaying a character table and a confirming cursor on a display set up on the electronic certificate tool or on the display of a computer to which the electronic certificate tool is connected, and moving the confirming cursor onto a character in the character table to confirm the input of the character;
A2: repeating step A1 until one or more than one piece of business information is confirmed.

6. The method according to Claim 5, wherein the character table comprises at least an input complete indication for confirming one or more than one piece of business information by moving the confirming cursor via the electronic certificate tool onto the input complete indication after step A1 has been repeated in step A2.

7. The method according to Claim 5, in step A1 the input of the character is confirmed by showing the inputted character as prompt information.

8. The method according to Claim 1, wherein the step of inputting the business information in step A1 comprises showing the inputted business information as prompt information.

9. The method according to Claim 7 or 8, wherein the step of showing the prompt information comprises:
showing the prompt information on the display of a computer connected to the electronic certificate tool or / and on the display of the electronic certificate tool; or /and
indicating the prompt information with an indicator light on the computer connected to the electronic certificate tool or/ and an indicator light on the electronic certificate tool; or / and
outputting the prompt information with the audio output device of the computer connected to the electronic certificate tool or / and the audio output device of the electronic certificate tool.

10. The method according to Claim 1, before step B, further comprising:
setting up a data confirmation module in the electronic certificate tool, judging whether the business information inputted in step A is valid, proceeding to step B if the business information is valid, otherwise returning to step Ato input the business information again.

11. The method according to Claim 10, wherein the step of judging whether the business information inputted in step A is valid comprises:
showing the business information or playing an audio version of the business information by the electronic certificate tool or the computer connected to the electronic certificate tool, and regarding the business information valid once the user confirms the business information.

12. The method according to Claim 10, further comprising:
starting up the electronic certificate tool, when the business information inputted in step A is confirmed to be valid before step B; and
shutting down the electronic certificate tool after step B.

13. The method according to Claim 1, further comprising:
starting up the electronic certificate tool before step B,; and
shutting down the electronic certificate tool after step B.

14. The method according to Claim 12 or 13, further comprising:
notifying the user via a notify function set up in the electronic certificate tool that the business information shall be handled with the electronic certificate tool, sending, via a controller on the electronic certificate tool upon receipt of a confirmation from the user, a control signal for starting up the electronic certificate tool to a control module set in the electronic certificate tool, and starting up the electronic certificate tool by the control module, before starting up the electronic certificate tool.

15. The method according to Claim 14, wherein the step of sending the control signal for starting up the electronic certificate tool to the control module comprises:
sending the control signal for starting up the electronic certificate tool to the control module by manually turning on the controller which is a hardware switch or a button; or
sending the control signal for starting up the electronic certificate tool to the control module by clicking the controller, which is a software button set on the electronic certificate tool or shown on the display of the computer, by using the input or confirmation function set in the electronic certificate tool; or
sending the control signal for starting up the electronic certificate tool to the control module by recognizing a biological feature or electronic feature by the controller which is a biological recognition switch or an electronic recognition switch, the biological recognition switch being a finger print recognition switch, a voice recognition switch or an iris recognition switch, the electronic recognition switch being a magnetic card recognition switch or an identification card (IC) recognition switch.

16. The method according to Claim 12 or 13, wherein the step of shutting down the electronic certificate tool comprises:
sending a control signal for shutting down the electronic certificate tool to the control module of the electronic certificate tool via a controller set on the electronic certificate tool, and shutting down the electronic certificate tool by the control module; or
sending a control signal for shutting down the electronic certificate tool from a timer to the control module of the electronic certificate tool when the elapsed operation time of the electronic certificate tool recorded by the timer exceeds a preset time limit, and shutting down the electronic certificate tool by the control module.

17. The method according to Claim 16, wherein the step of sending the control signal for shutting down the electronic certificate tool to the control module comprises:
sending the control signal for shutting down the electronic certificate tool to the control module by manually turning off the controller which is a hardware switch or a button; or
sending the control signal for shutting down the electronic certificate tool to the control module by clicking the controller, which is a software button set on the electronic certificate tool or shown on the display of the computer, by using the input or confirmation function set in the electronic certificate tool; or
sending the control signal for shutting down the electronic certificate tool to the control module by recognizing a biological feature or electronic feature by the controller which is a biological recognition switch or an electronic recognition switch, the biological recognition switch being a finger print recognition switch, a voice recognition switch or an iris recognition switch, the electronic recognition switch being a magnetic card recognition switch or an identification card (IC) recognition switch.

18. An apparatus for ensuring the security of an electronic certificate tool, comprising an encryption, signature or / and authentication module and a data output module, wherein the encryption, signature or / and authentication module and the data output module are connected to each other; a data input module, and an input confirmation module, which is connected to the encryption, signature or /and authentication module and connected to the data input module; the apparatus is adapted to acquire the inputted business information, confirm the business information, send the business information to the encryption, signature or / and authentication module for encryption, signature attachment or / and authentication, and send the business information to a computer connected to the Internet via the data output module.

19. The apparatus according to Claim 18, wherein the data input module comprises:
a keyboard, a single button or a multi-directional button, and a prompt module, adapted to output prompt information on the display or an audio notification to notify the user to input the business information via the keyboard, the single button or the multi-directional button, and to input the business information via the keyboard, the single button or the multi-directional button; or
a soft keyboard and a control device, adapted to control the soft keyboard shown on the display with the control device to input the business information; or
a biological recognition module, adapted to recognize a biological feature and input the biological feature as the business information; or
a dynamic password module, adapted to generate a dynamic password directly and input the dynamic password as the business information; or
a storage module, adapted to store business information and to directly input the stored business information upon the starting up of the electronic certificate; or
a cursor input module, adapted to move the confirming cursor, shown on the display, repeatedly onto characters in the character table shown on the display to confirm the input of the characters, so as to obtain the business information to be inputted.

20. The apparatus of Claim 19, wherein the biological recognition module comprises:
a finger print recognition module, adapted to recognize finger print and input recognized finger print as the business information; or
a voice recognition module, adapted to recognize voice and input recognized voice as the business information; or
an iris recognition module, adapted to recognize iris and input recognized iris as the business information.

21. The apparatus according to Claim 18, further comprising an information prompt module, connected to the data confirmation module and adapted to receive the business information confirmed by the data confirmation module or to receive via the data confirmation module the business information inputted through the data input module, and to process the received business information as the prompt information.

22. The apparatus according to Claim 21, further comprising a primary display module, connected to the information prompt module and adapted to show the prompt information received from the information prompt module.

23. The apparatus according to Claim 21, wherein the information prompt module comprises:
a prompt information display module, adapted to send the prompt information to the primary display module of the apparatus so as to show the prompt information on a display connected to the apparatus; or
a prompt information indication module, adapted to indicate the prompt information with an indicator light on a computer connected to the apparatus or with a standalone indicator light; or
a prompt information audio output module, adapted to output an audio version of the prompt information with the audio output device of a computed connected to the apparatus or with a standalone audio output device.

24. The apparatus according to Claim 18, further comprising a control module, connected to the encryption, signature or / and authentication module and adapted to control, according to a received control signal for starting up or shutting down the apparatus, whether the confirmed business information should be encrypted, attached signature to or / and authenticated; and
the apparatus further comprising a controller, connected to the control module and adapted to send the control signal for starting up or shutting down the apparatus.

25. The apparatus according to Claim 24, further comprising a timer, connected to the control module and adapted to time the operation of the apparatus and to stop the operation of the apparatus via the control module when the elapsed operation time of the apparatus exceeds preset time limit.

26. The apparatus according to Claim 25, further comprising a time limit setting module, connected to the timer and adapted to setting up the preset time limit for the timer.

27. The apparatus according to Claim 24, further comprising a notification module, connected to the control module and adapted to notify the user to send via the controller the control signal for starting up or shutting down the apparatus.

28. The apparatus according to Claim 24, wherein the controller comprises:
a hardware switch or a button, adapted to send the control signal for starting up or shutting down the apparatus to the control module by turning on / off the switch or by pushing the button; or
a software button shown on the display of a computed connected to the apparatus or on a standalone display, wherein the control signal for starting up or shutting down the apparatus is sent to the control module by clicking the software button; or
an identity recognition switch, adapted to recognize the identity of the user by using the biological recognition switch or the electronic recognition switch and to send the control signal for starting up or shutting down the apparatus to the control module.

29. The apparatus according to Claim 28, wherein the biological recognition switch in the identity recognition switch comprises a finger print recognition switch, a voice recognition switch or / and an iris recognition switch; and
the electronic recognition switch in the identity recognition switch comprises an IC card recognition switch or / and a magnetic card recognition switch.

30. The apparatus according to Claim 18, wherein the business information comprises one or any combination of: business type, bank identification information, account number information, payment amount information, time information, currency type information, dealing password information, account type information and account name information.
